# EUROPEAN PATENT APPLICATION

(11) **EP 4 375 427 A1**
(43) Date of publication of application: **29.05.2024**
(21) Application number: 22845949.1
(22) Date of filing: 20.07.2022
(51) Int. Cl.: E02F 3/84, E02F 9/26, H04Q 9/00

(54) **WORK ASSISTANCE SYSTEM, CONTROL METHOD FOR WORK ASSISTANCE SYSTEM, AND CONTROL PROGRAM FOR WORK ASSISTANCE SYSTEM**

(30) Priority: 20.07.2021 JP 2021119391
(71) Applicant: Nippon Seiki Co., Ltd., Nagaoka-shi, Niigata 940-8580 (JP)
(72) Inventor: SASAZAKI, Yasunori, Nagaoka (JP)
(74) Representative: Carpmaels & Ransford LLP
(86) International application number: PCT/JP2022/028192
(87) International publication number: WO 2023/003016

(57) **Abstract**

The present invention suitably assists operation by an operator even when a mobile information terminal device is used and there is a temporary disconnection in wireless communication with the mobile information terminal device. The present invention comprises: detection devices 11A, 11B, 11C which are held by movable parts 4, 5, 6 of a work machine and which acquire orientation information of the movable parts 4, 5, 6 via sensors and output the orientation information; a display unit 14 which displays assistance information for assisting operation by an operator; a main device 12 which acquires the orientation information from the detection devices 11A, 11B, 11C, which sends the orientation information via wireless data communication, which receives the assistance information via wireless data communication, and which outputs the assistance information to the display unit 14; and a mobile information terminal device 13 which receives the orientation information sent from the main device 12, which generates assistance information on the basis of the orientation information, and which outputs the assistance information to the main device 12. The mobile information terminal device 13 detects the amount of change in the orientation information necessary to achieve a construction target and outputs assistance information.

## Description

### TECHNICAL FIELD

The present invention relates to a work assistance system, a control method for a work assistance system, and a control program for a work assistance system and, for example, is applicable to a work machine such as a hydraulic shovel.

### BACKGROUND ART

Conventionally, a work machine in which a machine guidance function is incorporated (a work machine to which a work assistance system is applied, a so-called ICT construction machine) has been provided.

Machine guidance is a technology of assisting an operation of a work machine by using a measurement technology, such as a total station (TS) and a global navigation satellite system (GNSS). According to the machine guidance, it is possible to improve work efficiency, safety, and work accuracy by appropriately assisting an operation of an operator.

In such an ICT construction machine, a sensor is arranged on a movable part of the work machine, and information for assisting an operation of an operator (hereinafter appropriately referred to as assistance information) is prepared based on a detection result by the sensor (Patent Document 1, for example).

### PRIOR ART DOCUMENT

### PATENT DOCUMENT

Patent Document 1: JP 2015-14147 A

### SUMMARY OF THE INVENTION

### PROBLEMS TO BE SOLVED BY THE INVENTION

A mobile information terminal device such as a smartphone or a tablet terminal is provided with a data communication function by means of wireless communication and is further provided with a sufficient arithmetic processing function.

Accordingly, when the detection result by the sensor is transmitted to the mobile information terminal device through data communication by means of wireless communication and assistance information is generated by the mobile information terminal device, it is considered that this type of work assistance system can be easily configured. In addition, since it is possible to easily cope with version-up or change of a program used for generation of assistance information, it is considered that the work assistance system can be flexibly configured.

However, when the mobile information terminal device is used as described above, it is expected that a connection of wireless communication with the mobile information terminal device is temporarily disconnected. In this case, a function of machine guidance is temporarily impaired, and as a result, there is a problem that it is difficult to appropriately assist the operation of the operator.

The present invention has been made in view of the above points, and an object of the present invention is to propose a work assistance system, a control method for the work assistance system, and a control program of the work assistance system, which are able to appropriately assist an operation of an operator even when a connection of wireless communication with a mobile information terminal device is temporarily disconnected by using the mobile information terminal device.

### SOLUTION TO PROBLEM

In order to solve such a problem, the invention according to claim 1 provides a work assistance system including: a detection unit being held by a movable part of a work machine and acquires and outputs orientation information of the movable part by a sensor; a display unit that displays assistance information for assisting an operation of an operator; a main device that acquires the orientation information from the detection device and transmits the orientation information through data communication by means of wireless communication and that also receives the assistance information through data communication by means of the wireless communication and outputs the assistance information to the display unit; and a mobile information terminal device that receives the orientation information transmitted from the main device, generates the assistance information, based on the orientation information, and transmits the assistance information to the main device, wherein the mobile information terminal device, wherein the mobile information terminal device detects an amount of change in the orientation information required until a construction target is constructed, and outputs the assistance information.

According to a configuration of claim 1, by detecting an amount of change in the orientation information required until the construction target is constructed, and outputting the assistance information, the main device can generate and provide the assistance information, based on the assistance information acquired until then and the change in the orientation information acquired from the detection device even when the mobile information terminal device cannot generate the assistance information due to a temporary disconnection of the connection of wireless communication with the mobile information terminal device. Thus, the operation of the operator is assisted by using the mobile information terminal device, and in this way, even when the connection of wireless communication with the mobile information terminal device is temporarily disconnected, the operation of the operator can be appropriately assisted.

According to the invention of claim 2, in the configuration of claim 1, when a connection with the mobile information terminal device by means of the wireless communication is interrupted, the main device acquires the orientation information from the detection device, generates the assistance information, and outputs the assistance information to the display unit.

According to a configuration of claim 2, even when the connection of wireless communication with the mobile information terminal device is temporarily disconnected, a more specific configuration enables the operation of the operator to be appropriately assisted.

The invention according to claim 3 provides a control method for a work assistance system including: a detection device that is held by a movable part of a work machine and that acquires and outputs orientation information of the movable part by a sensor; a display unit that displays assistance information for assisting an operation of an operator; a main device that acquires the orientation information from the detection device and transmits the orientation information through data communication by means of wireless communication, and that receives the assistance information through data communication by means of the wireless communication and outputs the assistance information to the display unit; and a mobile information terminal device that receives the orientation information transmitted from the main device, generates the assistance information, based on the orientation information, and transmits the assistance information to the main device, wherein the mobile information terminal device detects an amount of change in the orientation information required until a construction target is constructed and outputs the assistance information, and when a connection between the main device and the mobile terminal information terminal device by means of the wireless communication is interrupted, the main device acquires the orientation information from the detection device, generates the assistance information, and outputs the assistance information to the display unit.

According to a configuration of claim 3, by detecting an amount of change in orientation information required until a construction target is constructed and outputting assistance information, the main device can generate and provide assistance information from the assistance information acquired until then and the change in the orientation information acquired from the detection device even when the connection of wireless communication with the mobile information terminal device is temporarily disconnected and the mobile information terminal device cannot generate the assistance information. As a result, when the connection with the mobile information terminal device by means of wireless communication is interrupted, the main device acquires orientation information from the detection device and generates assistance information, thereby assisting the operation of the operator by using the mobile information terminal device. In this way, even when the connection of wireless communication with the mobile information terminal device is temporarily disconnected, the operation of the operator can be appropriately assisted.

The invention according to claim 4 provides a control program for a work assistance system for causing an arithmetic processing circuit to execute a predetermined processing procedure, the work assistance system including: a detection device that is held by a movable part of a work machine and that acquires and outputs orientation information of the movable part by a sensor; a display unit that displays assistance information for assisting an operation of an operator; a main device that acquires the orientation information from the detection device and transmits the orientation information through data communication by means of wireless communication, and that receives the assistance information through data communication by means of the wireless communication and outputs the assistance information to the display unit; and a mobile information terminal device that receives the orientation information transmitted from the main device, generates the assistance information, based on the orientation information, and transmits the assistance information to the main device, wherein the mobile information terminal device detects an amount of change in the orientation information required until a construction target is constructed and outputs the assistance information and the processing procedure includes: a disconnection detection step of detecting disconnection of a connection between the main device and the mobile information terminal device by means of the wireless communication and an orientation information generation step of, by the main device, acquiring the orientation information from the detection device, generating the assistance information, and outputting the assistance information to the display unit when disconnection of a connection between the main device and the mobile information terminal device by means of the wireless communication in the disconnection detection step.

According to the configuration of claim 4, by detecting the amount of change in the orientation information required until the construction target is constructed and outputting the assistance information, the main device can generate and provide the assistance information, based on the assistance information acquired until then and the change in the orientation information acquired from the detection device even when the connection of wireless communication with the mobile information terminal device is temporarily disconnected and the mobile information terminal device cannot generate the assistance information. Thus, when disconnection of the connection of wireless communication between the main device and the mobile information terminal device is detected in the disconnection detection step, the main device acquires the orientation information from the detection device, generates the assistance information, and outputs the assistance information to the display unit, thereby assisting the operation of the operator by using the mobile information terminal device. In this way, even when the connection of wireless communication with the mobile information terminal device is temporarily disconnected, the operation of the operator can be appropriately assisted.

### EFFECT OF THE INVENTION

According to the present invention, a mobile information terminal device is used, and in this way, it is possible to appropriately assist an operation of an operator even when a connection of wireless communication with the mobile information terminal device is temporarily disconnected.

### BRIEF DESCRIPTION OF THE DRAWINGS

Fig. 1 is a diagram illustrating a work assistance system according to a first embodiment of the present invention.
Fig. 2 is a block diagram of the work assistance system in Fig. 1.
Fig. 3 is a flowchart for explaining an operation of the work assistance system.
Fig. 4 is a flowchart illustrating a continuation of Fig. 3.
Fig. 5 is a diagram for explaining a construction target surface.

### MODE FOR CARRYING OUT THE INVENTION

### First Embodiment

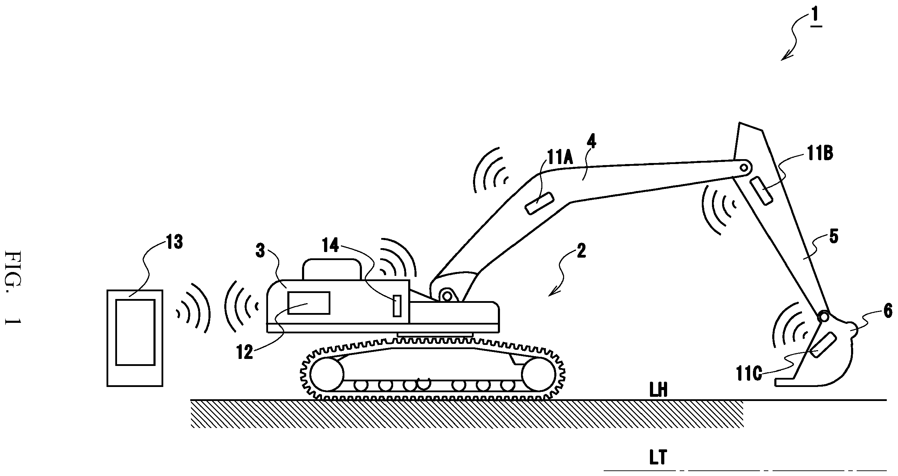

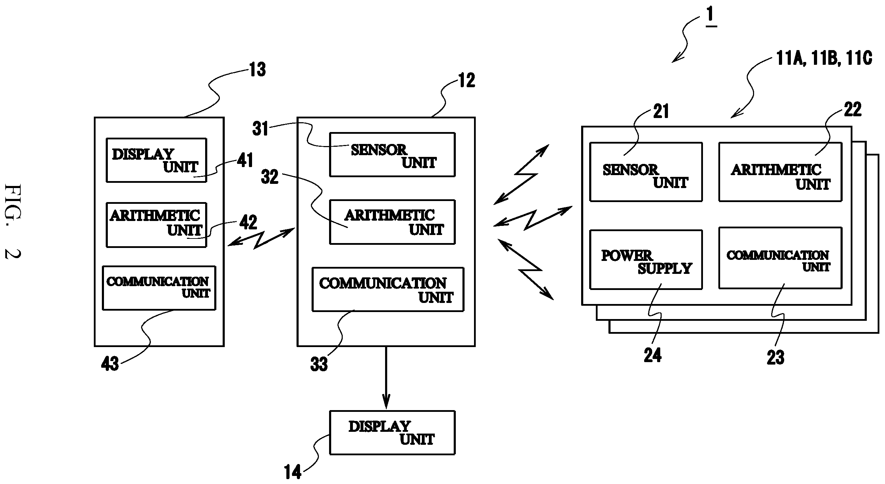

Fig. 1 is a diagram illustrating a work assistance system 1 according to a first embodiment of the present invention, and Fig. 2 is a block diagram.

The work assistance system 1 is applied to a hydraulic shovel 2, which is a work machine, and assists an operation of an operator who operates the hydraulic shovel 2 by a machine guidance function.

In the hydraulic shovel 2, a boom 4, an arm 5, and a bucket 6 are sequentially provided on a main body 3 that is self-propelled on a caterpillar track. The work assistance system 1 is not limitedly applied to the hydraulic shovel, but widely applied to various work machines used for civil engineering and construction works, such as a work machine used for ground reinforcement.

The work assistance system 1 includes detection devices 11A, 11B, and 11C, a main device 12, a mobile information terminal device 13, and a display unit 14, and the detection devices 11A, 11B, and 11C are arranged on the boom 4, the arm 5, and the bucket 6, respectively, which are movable parts of the hydraulic shovel 2. The detection devices 11A, 11B, and 11C may only be provided on some of the boom 4, the arm 5, and the bucket 6, and can be provided on various parts as required.

Each of the detection devices 11A, 11B, and 11C includes a sensor unit 21, an arithmetic unit 22, a wireless communication unit 23, and a power supply 24, is held by a movable part of the work machine, and acquires orientation information of the movable part by a sensor and outputs the information.

The sensor unit 21 includes a sensor, acquires three dimensional acceleration information and angular velocity information by the sensor, and outputs the information.

The arithmetic unit 22 processes a measurement result by the sensor, which is output from the sensor unit 21 by the built-in arithmetic processing circuit, thereby acquiring orientation information indicating an orientation of the corresponding movable part.

Herein, in this embodiment, an inertial measurement unit (IMU) sensor is applied to the sensor of the sensor unit 21. However, the sensor is not limited to the IMU sensor, and a sensor other than a three axis sensor may be applied, and various configurations capable of detecting orientation information can be widely applied. The sensor is not limited to a configuration capable of directly acquiring information for detecting an orientation of the movable part, and for example, a configuration capable of indirectly detecting the orientation of the movable part, such as a ranging sensor for measuring a distance to a land surface, can be widely applied.

Further, in this embodiment, for example, an angle of the movable part with respect to a reference line in a front-rear direction of a ground plane LH of the hydraulic shovel 2 and an angular velocity related to this angle are applied to the orientation information.

The wireless communication unit 23 transmits the orientation information acquired by the arithmetic unit 22 to the main device 12 by data communication by means of wireless communication. While a BLUETOOTH (registered trademark) is applied to the wireless communication in the wireless communication unit 23, wireless communication capable of data communications can be widely applied.

The power supply 24 outputs power supply for operating the detection devices 11A, 11B, and 11C by power of a battery.

In this way, by outputting the orientation information through data communication by means of wireless communication in such a way as to be operated by the power of the battery, the detection devices 11A, 11B, and 11C can be arranged in the work assistance system 1 without providing a power supply cable and a data communication cable, and can be easily applied to a desired work machine.

The display unit 14 is an image display unit provided in a driver's seat of the hydraulic shovel 2, and displays assistance information for assisting the operation of the operator, which is input from the main device 12. In addition to the display by the display unit 14 or instead of the display by the display unit 14, the assistance information may be notified by voice or alarm.

Specifically, in this embodiment, the assistance information is necessary operation amounts of the boom 4, the arm 5, and the bucket 6 for constructing the construction target surface LT. Accordingly, the display unit 14 provides the assistance information in a visually recognizable manner by bar-graph segment display using three systems corresponding to the boom 4, the arm 5, and the bucket 6, respectively. Note that the method of providing assistance information is not limited to these, and various methods can be applied.

The main device 12 is provided in the main body 3 of the work machine 2, acquires orientation information from the detection devices 11A, 11B, and 11C, transmits the orientation information through data communication by means of wireless transmission, and also receives assistance information through data communication by means of wireless communication and outputs the assistance information to the display unit 14. Therefore, the main device 12 includes a sensor unit 31, an arithmetic unit 32, and a wireless communication unit 33.

The sensor unit 31 is configured similarly to the sensor units 21 of the detection devices 11A, 11B, and 11C, and outputs orientation information of the main body 3.

The wireless communication unit 33 transmits and receives various data between the detection devices 11A, 11B, and 11C and the mobile information terminal device 13 through data communication by means of wireless communication.

The arithmetic unit 32 controls the operation of each unit by executing a control program related to the main device 12 of the work assistance system 1 by a built-in arithmetic processing circuit. Thus, in response to an instruction from the mobile information terminal device 13, the arithmetic unit 32 processes the measurement result by the sensor, which is output from the sensor unit 31 and acquires orientation information of the main body 3, and also acquires the orientation information from the detection devices 11A, 11B, and 11C. The orientation information is transmitted to the mobile information terminal device 13 through data communication by means of wireless communication. The assistance information transmitted from the mobile information terminal device 13 is received, and the assistance information is output to and displayed on the display unit 14.

In this series of processes, the arithmetic unit 32 detects disconnection of the connection of wireless communication with the mobile information terminal device 13 at a time interval at which the mobile information terminal device 13 instructs to acquire the orientation information. In addition, when disconnection of the connection by means of wireless communication is detected, the orientation information is acquired from the detection devices 11A, 11B, and 11C and the sensor unit 31, the assistance information is generated, and the assistance information is output to the display unit 14.

Thus, in the work assistance system 1, the operation of the operator is assisted by using the mobile information terminal device 13, and in this way, the operation of the operator is appropriately assisted even when the connection of wireless communication with the mobile information terminal device 13 is temporarily disconnected.

The mobile information terminal device 13 is a so-called smartphone or tablet terminal carried by an operator, generates assistance information, based on orientation information by the detection devices 11A, 11B, and 11C acquired via the main device 12, and transmits the generated assistance information to the main device 12.

More specifically, the mobile information terminal device 13 is provided with a display unit 41, an arithmetic unit 42, and a wireless communication unit 43.

Herein, the display unit 41 is formed by an image display panel such as a liquid crystal display panel, and displays various kinds of image information related to the mobile information terminal device 13.

The wireless communication unit 43 transmits and receives various data to and from the main device 12 through data communication by means of wireless communication under the control of the arithmetic unit 42, and further connects to a network and executes, for example, version-up of a program related to processing of the work assistance system 1.

The arithmetic unit 42 controls the operation of each unit and assists the operation of the operator by executing a program of the work assistance system 1 by a built-in arithmetic processing circuit.

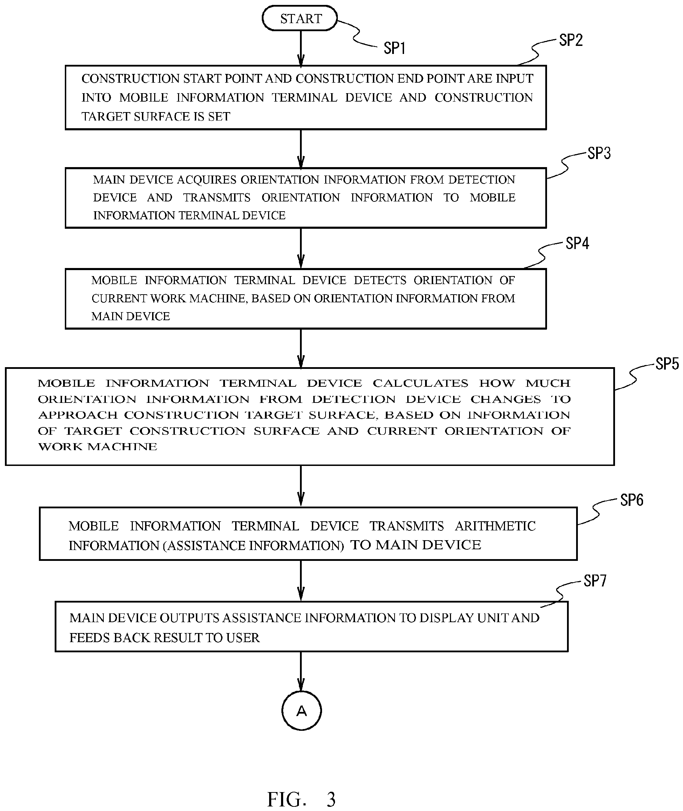

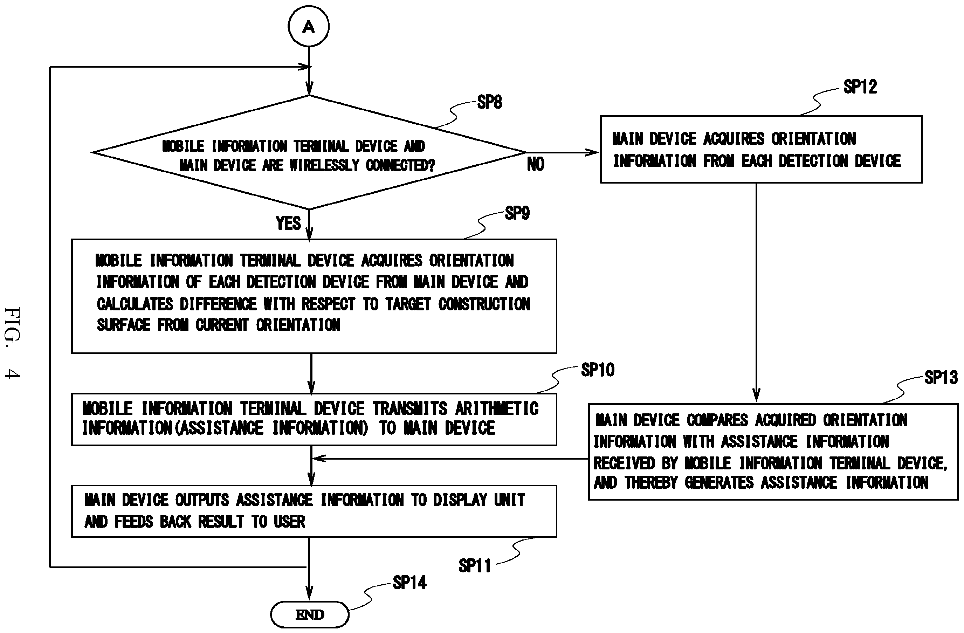

Figs. 3 and 4 are flowcharts each illustrating a processing procedure of the work assistance system 1 by the arithmetic unit 42 together with a processing procedure by the arithmetic unit 32 of the main device 12.

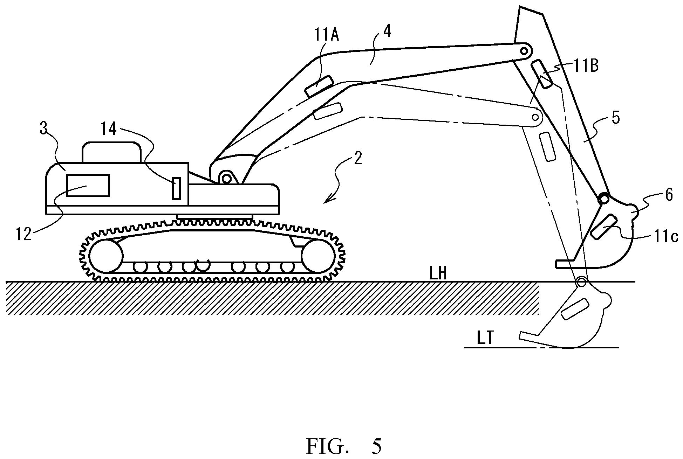

When activation of the work assistance system 1 is instructed by selection of a menu displayed on the display unit 41 of the mobile information terminal device 13, as illustrated in Fig. 5, the mobile information terminal device 13 receives input of a construction start point and a construction end point and receives a setting of a construction target surface LT (SP1 to SP2). In Fig. 5, a state where the bucket 6 is moved to the construction target surface LT is illustrated by an imaginary line. The construction start point is a point at which construction is started, and is a ground plane LH of the hydraulic shovel 2 in the example of Fig. 5. The construction end point is a point at which the construction ends. The input of the construction start point and the construction end point may be executed by inputting numerical values of height and depth with reference to the current position of the bucket 6, or may be set by digging with the bucket 6 on a trial basis.

Subsequently, in the work assistance system 1, the mobile information terminal device 13 requests the main device 12 to transmit the orientation information, whereby the main device 12 acquires the orientation information from the detection devices 11A, 11B, and 11C, and transmits the acquired orientation information from the main device 12 to the mobile information terminal device 13 together with the orientation information by the sensor unit 31 of the main device 12 (SP3).

Subsequently, the work assistance system 1 detects the current orientation of the work machine, based on the orientation information from the main device 12 in the mobile information terminal device 13 (SP4). The detection of the orientation is executed by detecting an inclination of each of the boom 4, the arm 5, and the bucket 6, based on the orientation information detected by the detection devices 11A, 11B, and 11C, for example.

Subsequently, the work assistance system 1 calculates, in the mobile information terminal device 13, how much the orientation information from the detection device changes to approach the construction target surface LT from the information of the construction target surface LT and the current orientation of the work machine (hydraulic shovel 2) (SP5). More specifically, in the mobile information terminal device 13, an inclination of the boom 4, the arm 5, and the bucket 6 in a state where a back surface of the bucket 6 is in contact with the construction target surface LT is acquired, and a difference value between the orientation information as the inclination and the orientation information from the detection device is acquired, thereby detecting and executing an amount of change in the orientation information required until the construction target is constructed.

Herein, when the amount of change in the orientation information required until the construction target is constructed becomes small, it can be said that the construction surface is approaching the construction target surface LT. Accordingly, it is possible to notify the operator of the amount of change in the orientation information required until the construction target is constructed and assist the operation of the operator. Accordingly, in this embodiment, the amount of change in the orientation information required until the construction target is constructed is applied to the assistance information.

The work assistance system 1 transmits the assistance information from the mobile information terminal device 13 to the main device 12 (SP6). At this time, the mobile information terminal device 13 also transmits coordinate information of the construction target surface LT. In this way, by applying the amount of change in the orientation information required until the construction target is constructed to the assistance information, even when the wireless communication between the mobile information terminal device 13 and the main device 12 is disconnected, the assistance information can be generated on the main device 12 side by the orientation information detected from the detection devices 11A, 11B, and 11C and the assistance information acquired by the main device 12 until then. Thus, the operation of the operator is assisted by using the mobile information terminal device 13, and even when the connection of wireless communication with the mobile information terminal device 13 is temporarily disconnected, the operation of the operator can be appropriately assisted.

Accordingly, in the work assistance system 1, the main device 12 outputs the assistance information to the display unit 14 and feeds back the result to the user (SP7).

Subsequently, the work assistance system 1 (Fig. 4) determines whether or not the mobile information terminal device 13 and the main device 12 are wirelessly connected to each other (disconnection detection step SP8). Herein, in the work assistance system 1, the main device 12 calls the mobile information terminal device 13 for a response at a time interval at which the mobile information terminal device 13 instructs the acquisition of orientation information, and when a response is acquired from the mobile information terminal device 13, the work assistance system 1 determines that the mobile information terminal device 13 and the main device 12 are wirelessly connected.

When the mobile information terminal device 13 and the main device 12 are wirelessly connected to each other, the work assistance system 1 requests the mobile information terminal device 13 to transmit the orientation information to the main device 12, acquires the orientation information of the detection devices 11A, 11B, and 11C, and detects the current orientation, based on the orientation information. Further, in the same manner as in step SP5, an amount of change (a difference value with respect to the construction target surface) in the orientation information required until the construction target is constructed is calculated based on the current orientation, and assistance information is generated (SP9).

Subsequently, the work assistance system 1 transmits the generated assistance information from the mobile information terminal device 13 to the main device 12 (SP10), outputs the assistance information from the main device 12 to the display unit 14 (SP11), determines whether or not the mobile information terminal device 13 and the main device 12 are wirelessly connected after a certain time elapses, and repeats a series of processes (SP8). Accordingly, the work assistance system 1 sequentially generates and outputs the assistance information according to the orientation information of the detection devices 11A, 11B, and 11C in such a way as to generate the assistance information based on the amount of change in the orientation information required until the construction target is constructed.

On the other hand, when the connection between the mobile information terminal device 13 and the main device 12 by means of wireless communication is interrupted, the work assistance system 1 acquires orientation information from each of the detection devices 11A, 11B, and 11C in the main device 12 (SP12).

Subsequently, in the work assistance system 1, the main device 12 compares the acquired orientation information with the received assistance information by the mobile information terminal device 13, and generates assistance information (SP13). More specifically, the work assistance system 1 compares the acquired orientation information with the received assistance information by the mobile information terminal device 13, and reduces the assistance information by an amount of change in the orientation information acquired by the main device 12, thereby generating the assistance information.

Thus, in the processing procedure of Fig. 4, the processing of the step SP12-SP13 is an orientation information generation step of, by the main device 12, acquiring orientation information from the detection devices 11A, 11B, and 11C, generating assistance information, and outputting the assistance information to the display unit 14 when disconnection of a connection between the main device 12 and the mobile information terminal device 13 by means of wireless communication is detected.

When the assistance information is generated on the main device 12 side in this way, the work assistance system 1 outputs the generated assistance information from the main device 12 to the display unit 14, feeds back a result to the user (SP11), determines whether or not the mobile information terminal device 13 and the main device 12 are wirelessly connected after a certain time elapses, and repeats a series of processes (SP8).

When the end of the processing is instructed by the mobile information terminal device 13, the processing procedure is ended (SP14).

According to the above configuration, by detecting the amount of change in the orientation information required until the construction target is constructed and outputting the assistance information, the main device can generate and provide the assistance information from the assistance information acquired until then and the change in the orientation information acquired from the detection device even when the connection of wireless communication with the mobile information terminal device is temporarily disconnected and the mobile information terminal device cannot generate the assistance information. Thus, the operation of the operator is assisted by using the mobile information terminal device, and in this way, even when the connection of wireless communication with the mobile information terminal device is temporarily disconnected, the operation of the operator can be appropriately assisted.

Further, when the connection with the mobile information terminal device by means of wireless communication is interrupted, the main device acquires the orientation information from the detection device and generates the assistance information. Therefore, even when the connection of wireless communication with the mobile information terminal device is temporarily disconnected by a more specific configuration, it is possible to appropriately assist the operation of the operator.

### Other Embodiments

While specific configurations suitable for the implementation of the present invention have been described in detail above, the configuration of the embodiment described above can be variously changed without departing from the spirit of the present invention.

### DESCRIPTION OF REFERENCE NUMERALS

- 1: Work assistance system
- 2: Hydraulic shovel
- 3: Main body
- 4: Boom
- 5: Arm
- 6: Bucket
- 11A, 11B, 11C: Detection device
- 12: Body device
- 13: Mobile information terminal device
- 14: Display unit
- 21,31: Sensor unit
- 22, 32, 42: Arithmetic unit
- 23, 33, 43: Wireless communication unit
- 24: Power supply
- 41: Display section

## Claims

1. A work assistance system comprising:
a detection device that is held by a movable part of a work machine and acquires and outputs orientation information of the movable part by a sensor;
a display unit that displays assistance information for assisting an operation of an operator;
a main device that acquires the orientation information from the detection device and transmits the orientation information through data communication by means of wireless communication, and that receives the assistance information through data communication by means of the wireless communication and outputs the assistance information to the display unit; and
a mobile information terminal device that receives the orientation information transmitted from the main device, generates the assistance information, based on the orientation information, and transmits the assistance information to the main device,
wherein the mobile information terminal device detects an amount of change in the orientation information required until a construction target is constructed and outputs the assistance information.

2. The work assistance system according to claim 1,
wherein the main device acquires the orientation information from the detection device, generates the assistance information, and outputs the assistance information to the display unit when a connection with the mobile information terminal device by means of the wireless communication is interrupted.

3. A control method for a work assistance system, the work assistance system comprising:
a detection device that is held by a movable part of a work machine and acquires and outputs orientation information of the movable part by a sensor;
a display unit that displays assistance information for assisting an operation of an operator;
a main device that acquires the orientation information from the detection device and transmits the orientation information through data communication by means of wireless communication, and that receives the assistance information through data communication by means of the wireless communication and outputs the assistance information to the display unit; and
a mobile information terminal device that receives the orientation information transmitted from the main device, generates the assistance information, based on the orientation information, and transmits the assistance information to the main device,
the control method for the work assistance system comprising:
by the mobile information terminal device, detecting an amount of change in the orientation information required until a construction target is constructed and outputting the assistance information; and
by the main device, acquiring the orientation information from the detection device, generating the assistance information, and outputting the assistance information to the display unit when a connection between the main device and the mobile information terminal device by means of the wireless communication is interrupted.

4. A control program for a work assistance system, the control program that causes a predetermined processing procedure to be executed by execution by an arithmetic processing circuit, the work assistance system comprising:
a detection device that is held by a movable part of a work machine and acquires and outputs orientation information of the movable part by a sensor;
a display unit that displays assistance information for assisting an operation of an operator;
a main device that acquires the orientation information from the detection device and transmits the orientation information through data communication by means of wireless communication, and that receives the assistance information through data communication by means of the wireless communication and outputs the assistance information to the display unit; and
a mobile information terminal device that receives the orientation information transmitted from the main device, generates the assistance information, based on the orientation information, and transmits the assistance information to the main device,
wherein
the mobile information terminal device detects an amount of change in the orientation information required until a construction target is constructed and outputs the assistance information and
the processing procedure includes:
a disconnection detection step of detecting disconnection of a connection between the main device and the mobile information terminal device by means of the wireless communication; and
an orientation information generation step of, by the main device, acquiring the orientation information from the detection device, generating the assistance information, and outputting the assistance information to the display unit when disconnection of the connection between the main device and the mobile information terminal device by means of the wireless communication is detected in the disconnection detection step.
